# EUROPÄISCHE PATENTANMELDUNG

(11) **EP 3 587 045 A1**
(43) Veröffentlichungstag der Anmeldung: **01.01.2020**
(21) Anmeldenummer: 18180476.6
(22) Anmeldetag: 28.06.2018
(51) Int. Cl.: B25J 9/16, G05B 13/02

(54) **VERFAHREN UND VORRICHTUNG ZUM RECHNERGESTÜTZTEN ERMITTELN VON REGELPARAMETERN FÜR EINE GÜNSTIGE HANDLUNG EINES TECHNISCHEN SYSTEMS**

(71) Anmelder: Siemens Aktiengesellschaft, 80333 München (DE)
(72) Erfinder: Bachmaier, Georg, 80469 München (DE); Bischoff, Martin, 85653 Aying, Großhelfendorf (DE)

(57) **Zusammenfassung**

Die Erfindung betrifft ein Verfahren und eine Vorrichtung zum rechnergestützten Ermitteln von Regelparametern für eine günstige Handlung eines technischen Systems, beispielsweise eines technischen Subsystems eines technischen Systems. Es wird ein Ausgangszustand (AZ) und eine Umgebung (UM) des technischen Systems (TS) erfasst und ein Zielzustand (ZZ) eingelesen. Es wird ein physikalisches Simulationsmodell (SIM) des technischen Systems (TS), das zumindest teilweise mit der Umgebung (UM) und/oder dem Ausgangszustand (AZ) übereinstimmt, selektiert und Ausgangswerte des physikalischen Simulationsmodells (SIM) an die Umgebung (UM) und/oder den Ausgangszustand (AZ) angepasst. Ausgehend von den Ausgangswerten und in Bezug auf den Zielzustand (ZZ), werden verschiedene Kombinationen aus Handlungsschritten des technischen Systems (TS) simuliert, wobei Regelparameter des technischen Systems (TS) zum Ausführen der Handlungsschritte variiert werden. Anhand der Simulationsdaten wird eine maschinelle Lernroutine mittels einer Bewertung eines jeweiligen Handlungsschrittes trainiert und anhand der trainierten maschinellen Lernroutine wird eine Kombination aus günstigen Handlungsschritten für das technische System (TS) ermittelt.

## Beschreibung

Die Erfindung betrifft ein Verfahren und eine Vorrichtung zum rechnergestützten Ermitteln von Regelparametern für eine günstige Handlung eines technischen Systems, beispielsweise eines Endeffektors eines autonomen Roboters.

Mittels autonomen technischen Systemen, wie z.B. autonomen Robotern, können Objekte manipuliert werden. Als Beispiel ist hier das Fangen eines Objektes, das sich auf einer Flugbahn befindet, durch einen Endeffektor eines Roboters zu nennen. Insbesondere sollen autonome technische Systeme schnell auf eine Situation reagieren bzw. schnell eine bestmögliche Handlung ausführen können.

Ein technisches System kann insbesondere aus Subsystemen, wie z.B. einem Prozessor und einem Endeffektor, aufgebaut sein, welche insbesondere als hierarchisch strukturierte Recheneinheiten aufgebaut und miteinander vernetzt sein können. So können insbesondere Handlungen oder Handlungsschritte auf verschiedenen Ebenen einer hierarchisch strukturierten Steuerung prozessiert und umgesetzt werden.

Herkömmliche Steuerungsverfahren basieren beispielsweise auf dem Erkennen eines Objektes in der Umgebung des technischen Systems durch Sensoren und dem Ermitteln eines geeigneten Handlungsablaufs zur Manipulation des Objektes mittels Pfadplanungsalgorithmen. So können herkömmliche Verfahren typischerweise lediglich einen Ist-Zustand einer Umgebung eines technischen Systems betrachten und nur schwer prognostizieren, wie, aufgrund von physikalischen Gesetzmäßigkeiten, dessen Handlungen die Umgebung beeinflussen.

Es können beispielsweise sogenannte simultane Lokalisierung und Kartenerstellungsverfahren (englisch: "Simultaneous Localization and Mapping"), auch als SLAM-Verfahren bekannt, genutzt werden, wobei mittels Sensordaten die Umgebung eines autonomen technischen Systems erfasst oder geschätzt wird. Insbesondere wird die Position und Ausrichtung des autonomen technischen Systems selbst und ggf. weiterer Objekte in der Umgebung erfasst. Mittels Pfadplanungsalgorithmen, welche typischerweise auf mathematischen und/oder numerischen Methoden basieren, kann ein zulässiger und günstiger Pfad bzw. Abfolge von Handlungsschritten für das autonome technische System ermittelt werden. Solche Verfahren berücksichtigen aber in der Regel keine Konsequenzen einer Handlung des autonomen technischen Systems oder physikalischen Effekte.

Es ist daher eine Aufgabe der vorliegenden Erfindung, eine Möglichkeit zu schaffen, günstige Handlungsschritte für ein technisches System unter Berücksichtigung dessen Umgebung zu ermitteln.

Die Aufgabe wird gelöst durch ein Verfahren mit den Merkmalen des Patentanspruchs 1, einer Vorrichtung und ein Computerprogrammprodukt. Vorteilhafte Ausführungsformen und Weiterbildungen der Erfindung sind in den abhängigen Ansprüchen angegeben.

Ein erster Aspekt der Erfindung betrifft ein Verfahren zum rechnergestützten Ermitteln von Regelparametern für eine günstige Handlung eines technischen Systems, umfassend die Verfahrensschritte:
- Erfassen eines Ausgangszustands und einer Umgebung des technischen Systems mittels mindestens eines Sensors,
- Ermitteln eines Zielzustandes für das technische System,
- Selektieren eines physikalischen Simulationsmodells des technischen Systems und dessen Umgebung, das zumindest teilweise mit der Umgebung und/oder dem Ausgangszustand übereinstimmt,
- Anpassen von Ausgangswerten des physikalischen Simulationsmodells an die Umgebung und/oder den Ausgangszustand,
- Simulieren verschiedener Kombinationen aus Handlungsschritten des technische Systems mittels des physikalischen Simulationsmodells, ausgehend von den Ausgangswerten und in Bezug auf den Zielzustand, wobei Regelparameter des technische Systems zum Ausführen der Handlungsschritte variiert werden, und Ausgeben von jeweiligen resultierenden Simulationsdaten,
- Trainieren einer maschinellen Lernroutine anhand der jeweiligen resultierenden Simulationsdaten mittels einer Bewertung eines jeweiligen Handlungsschrittes,
- Ermitteln einer optimierten Kombination aus Handlungsschritten anhand der trainierten maschinellen Lernroutine, wobei der optimierten Kombination aus Handlungsschritten eine günstige Bewertung zugeordnet ist,
   und
- Ausgeben der Regelparameter der optimierten Kombination aus Handlungsschritten zum Steuern des technischen Systems.

Es ist ein Vorteil der Erfindung, dass mittels einer rechnergestützten physikalischen Simulation in Kombination mit einer maschinellen Lernroutine auf schnelle und effiziente Weise eine optimierte Handlung bzw. ein optimierter Handlungsablauf bzw. Pfad für ein technisches System bestimmt werden kann, wobei insbesondere physikalische Effekte, wie z.B. Gravitation oder Kollision, und physikalische Größen berücksichtigt werden können. Insbesondere kann ein technisches System auch als ein technisches Subsystem eines technischen Systems verstanden werden. So kann insbesondere gemäß der Erfindung eine günstige Handlung auch für ein Subsystem des technischen Systems, wie z.B. ein Endeffektor eines Roboters, ermittelt werden. Beispielsweise kann die Komplexität der Berechnung der Simulation reduziert werden, indem ein Simulationsmodell des technischen Systems ausgewählt wird, dessen Konfiguration oder Ausgangswerte nahe am Ausgangszustand des technischen Systems oder des Subsystems des technischen Systems sind.

Mittels der maschinellen Lernroutine können günstige Handlungsschritte für das technische System oder für das technische Subsystem anhand der Simulationsdaten ermittelt werden, wobei die Handlungsschritte physikalische Effekte, wie z.B. Wechselwirkungen mit der Umgebung, nutzen. Damit kann eine schnelle und präzise Pfadplanung erreicht werden, die insbesondere Konsequenzen eines vorhergehenden Handlungsschrittes und/oder eines physikalischen Effektes berücksichtigt. So kann das technische System insbesondere physikalische Gesetzte bei der Pfadplanung berücksichtigen, wie z.B. einen Parabelflug eines zu fangenden Objektes im Gravitationsfeld der Erde.

Insbesondere kann ein physikalisches Simulationsmodell bereitgestellt werden, das der realen durch einen Sensor erfassten Umgebung und der Ausgangssituation des technischen Systems zumindest teilweise entspricht. Das Simulationsmodell kann vorzugsweise ein Modell des gesamten oder eines Teils, wie z.B. eines Subsystems, des technischen Systems umfassen, so dass insbesondere eine Simulation eines Subsystems abhängig von Randbedingungen sein kann, die durch das Simulationsmodell des technischen Systems festgelegt sind. Es kann mittels einer rechnergestützten Simulation und anhand des Simulationsmodells mindestens ein Handlungsablauf des technischen Systems simuliert werden. Dadurch kann insbesondere eine schnelle Berechnung der Simulation erzielt werden. Das physikalische Simulationsmodell kann somit insbesondere anstatt eines herkömmlichen SLAM-Verfahrens genutzt werden. Eine Pfadplanung kann beispielsweise durch ein wiederholtes Durchführen der physikalischen Simulation mit unterschiedlichen Pfaden, d.h. beispielsweise unterschiedliche Ansteuerungsmöglichkeiten des technischen Systems mittels verschiedener Regelparameter, im Rahmen eines maschinellen Lernverfahrens erfolgen. Durch eine beispielsweise positive Bewertung der Pfade kann eine optimierte Pfadplanung erzielt werden, wobei physikalische Gesetze in die Planung mit einbezogen werden können. Dadurch ist die Bestimmung eines günstigen Handlungsablaufs insbesondere flexibel, da die Abfolge der Handlungsschritte nicht starr vorgegeben ist.

Ein technisches System kann insbesondere ein autonomes technisches System, wie z.B. ein autonomer Roboter, sein. Ein Subsystem des technischen Systems kann insbesondere ein Endeffektor eines Roboters oder ein Aktor einer Maschine sein. Unter Ermittlung einer Kombination von Handlungsschritten kann insbesondere Planung einer Aktionssequenz oder eine Handlungsplanung oder eine Pfadplanung verstanden werden, wobei die einzelnen Handlungsschritte mittels Regelparametern gesteuert werden. Unter einem Handlungsschritt kann insbesondere eine Aktion oder eine Bewegung des technischen Systems oder eines Subsystems verstanden werden.

Unter einer maschinellen Lernroutine kann ein maschinelles Lernverfahren, wie z.B. ein neuronales Netz, verstanden werden. Insbesondere kann ein Verfahren zum überwachten Lernen, wie z.B. zum bestärkenden Lernen (englisch: "Reinforcement Learning"), genutzt werden. Die maschinelle Lernroutine wird ausgehend von einem durch mindestens einen Sensor ermittelten Ausgangszustand des technischen Systems und in Bezug auf einen vorgegebenen Zielzustand mittels Simulationsdaten trainiert. In anderen Worten, ein Zielzustand wird zum Trainieren der maschinelle Lernroutine vorgegeben und die maschinelle Lernroutine wird derart trainiert, dass sie ausgehend von einem Ausgangszustand eine Kombination von Handlungsschritten ermittelt, die zum Zielzustand führen. Der Zielzustand kann beispielsweise vorgegeben sein und/oder als Datensatz eingelesen werden. Es können verschiedene Kombinationen von Handlungsschritten ausgehend vom Ausgangszustand zum Zielzustand führen, wobei manche der verschiedenen Kombinationen günstiger sein können. Die verschiedenen Handlungsschritte können mittels des Simulationsmodells rechnergestützt simuliert werden und jeweils Simulationsdaten ausgegeben werden. Die Simulationsdaten können insbesondere Werte der Regelparameter, Zustände, Aktionen und Reaktionen des technischen Systems und physikalische Effekte und Größen des technischen Systems und dessen Umgebung umfassen.

Jeder Handlungsschritt und/oder dessen Auswirkung kann bewertet werden oder jedem Handlungsschritt kann jeweils eine Bewertung zugeordnet sein. Die maschinelle Lernroutine kann insbesondere anhand der Bewertungen, wie z.B. Wertzahlen, die jeweils einem Handlungsschritt zugeordnet werden, trainiert werden, wie z.B. mittels einer Belohnungsfunktion (englisch: "reward function"). Insbesondere können günstige Handlungsschritte bevorzugt werden, wobei unter dem Begriff "günstig" in Zusammenhang mit der Erfindung beispielsweise vorteilhaft, brauchbar, geeignet, sinnvoll, effizient, energieeffizient, schnell, auf kurzem Weg oder ähnliches verstanden werden kann. Die Ermittlung einer Kombination aus günstigen Handlungsschritten kann beispielsweise durch einen Vergleich der Gesamtbewertung der verschiedenen Kombinationen aus Handlungsschritten erfolgen, wobei diejenige Kombination mit einer günstigen Gesamtbewertung selektiert werden kann.

In einer vorteilhaften Ausführungsform des Verfahrens kann mindestens ein physikalisches Simulationsmodell des technischen Systems und dessen Umgebung generiert und gespeichert und anschließend zur Selektion bereitgestellt werden.

Vorzugsweise kann mindestens ein physikalisches Simulationsmodell des technischen Systems und dessen Umgebung vorab generiert und beispielsweise in einer Datenbank gespeichert werden. Beispielsweise kann eine Vielzahl an Simulationsmodellen bereitgestellt werden und, abhängig vom erfassten Ausgangszustand und/oder der Umgebung des technischen Systems und/oder eines Subsystems des technischen Systems, ein möglichst ähnliches Simulationsmodell selektiert werden.

In einer weiteren vorteilhaften Ausführungsform des Verfahrens kann die maschinelle Lernroutine trainiert werden, sobald Simulationsdaten von mindestens einer Kombination aus Handlungsschritten verfügbar sind.

Es kann von Vorteil sein, die computergestützte Simulation des technischen Systems oder eines Teils der technischen Systems sowie das Training der maschinellen Lernroutine parallel durchzuführen. Beispielsweise kann eine parallele Berechnung auf mehr als einer Recheneinheit, wie z.B. auf mehreren Grafikprozessoren, durchgeführt werden. Damit kann beispielsweise eine schnelle und effiziente Ermittlung einer günstigen Kombination aus Handlungsschritten erzielt werden.

In einer weiteren vorteilhaften Ausführungsform des Verfahrens kann die Bewertung eines Handlungsschrittes abhängig von einem Ergebnis eines Handlungsschritts in Bezug auf den Zielzustand ausgeführt werden.

Ein Handlungsschritt des Subsystems, wie z.B. eine Aktion eines Endeffektors, kann abhängig vom Ergebnis, oder auch einer Auswirkung der jeweiligen Aktion bewertet werden. Insbesondere kann die Bewertung dem Handlungsschritt zugeordnet werden. Eine Bewertung kann insbesondere abhängig vom oder in Bezug auf den vorgegebenen Zielzustand erfolgen.

In einer weiteren vorteilhaften Ausführungsform des Verfahrens kann der Zielzustand abhängig vom erfassten Anfangszustand und/oder von der erfassten Umgebung des technischen Systems ermittelt werden.

Vorzugsweise kann mittels eines Sensors ein Anfangszustand ermittelt und ausgehend von diesem Anfangszustand ein Zielzustand bestimmt werden. Dies kann insbesondere eine schnelle Aktion oder Reaktion des technischen Systems oder eines Subsystems ermöglichen. Beispielsweise kann ein Zielzustand einem Anfangszustand zugeordnet sein oder ein Zielzustand kann aus einer Menge an vorgegebenen Zielzuständen selektiert werden. Als Beispiel kann die Detektion eines Objekts mittels einer Kamera genannt werden, wobei abhängig von der Detektion der Zielzustand vorgegeben wird.

In einer weiteren vorteilhaften Ausführungsform des Verfahrens kann das physikalische Simulationsmodell abhängig vom Ausgangszustand und/oder vom Zielzustand und/oder von der Umgebung und/oder von einer Art des technischen Systems konstruiert werden.

Vorzugsweise kann die Komplexität und/oder die Dimension des physikalischen Simulationsmodells und der rechnergestützten Simulation abhängig vom Ausgangszustand und/oder vom Zielzustand und/oder von der Umgebung und/oder von der Art des technischen Systems und/oder eines technischen Subsystems gewählt werden.

In einer weiteren vorteilhaften Ausführungsform des Verfahrens können physikalische Eigenschaften eines Objektes in der Umgebung des technischen Systems als Parameterdaten erfasst, in einer Speichereinheit gespeichert und im physikalischen Simulationsmodell integriert werden.

Zusätzlich zur Objekterkennung durch einen Sensor können zusätzlich physikalische Eigenschaften oder Parameter eines Objektes in z.B. einer Datenbank gespeichert sein und von dort abgefragt werden. Beispielsweise können physikalische Größen, wie z.B. Gewicht oder Materialeigenschaften, eines Objekts vorab erfasst und in einer Speichereinheit, wie z.B. einer Datenbank, gespeichert werden. Die physikalischen Eigenschaften können insbesondere als Parameterdaten, oder auch als Eingabedaten, für das Simulationsmodell genutzt werden. Somit können beispielsweise physikalische Effekte, wie z.B. die Beschleunigung eines fallenden Objektes im Gravitationsfeld der Erde, detailliert simuliert werden.

In einer weiteren vorteilhaften Ausführungsform des Verfahrens kann die Simulation des technischen Systems und das Training der maschinellen Lernroutine für mehr als einen Zielzustand und/oder für mehr als einen Ausgangszustand des technischen Systems durchgeführt werden und jeweils eine optimierte Kombination aus Handlungsschritten für das technische System mit einer günstigen Bewertung ermittelt und in einer Speichereinheit gespeichert wird.

Beispielsweise kann mehr als eine maschinelle Lernroutine mittels Simulationsdaten zu verschiedenen Ausgangszuständen und in Bezug auf verschiedene Zielzustände trainiert werden und jeweils eine Kombination aus Handlungsschritten, der eine günstige Bewertung zugeordnet ist, in einer Speichereinheit gespeichert werden. Somit kann vorzugsweise für verschiedene Zustände eines technischen Subsystems des technischen Systems eine entsprechende trainierte maschinelle Lernroutine abgespeichert werden, so dass auf diese schnell zugegriffen werden kann, wenn z.B. ein entsprechender Ausgangszustand des technischen Systems detektiert und/oder ein bestimmter Zielzustand vorgegeben wird. Es ist auch möglich, ähnliche Aktionen zu simulieren, eine entsprechende maschinelle Lernroutine zu trainieren und diese für künftige Trainings zu nutzen, so dass die Berechnungszeit verkürzt werden kann. Eine Speichereinheit kann insbesondere eine Datenbank sein. Es können somit verschiedene Handlungsschritte für verschiedene Situationen simuliert und daraus Reflexe gelernt werden. Die Trainingszeit während einer realen Situation kann somit verkürzt werden.

In einer weiteren vorteilhaften Ausführungsform des Verfahrens können Regelparameter für eine optimierte Kombination aus Handlungsschritten mit einer günstigen Bewertung in Abhängigkeit eines Zielzustandes in einer Speichereinheit gespeichert werden.

Vorzugsweise kann anhand einer trainierten maschinellen Lernroutine eine Kombination aus Handlungsschritten, der eine günstige Bewertung zugeordnet ist, ermittelt werden und die entsprechenden Regelparameter für das Subsystem, die diese Handlungsschritte regeln, können in einer Datenbank abgelegt werden. So können diese beispielsweise für eine künftige Aktion mit einem gleichen oder zumindest ähnlichen Ausgangs- und Zielzustand abgefragt und ausgeführt werden.

In einer weiteren vorteilhaften Ausführungsform des Verfahrens können verschiedene Kombinationen aus Handlungsschritten des technischen Systems zeitlich parallel auf mehr als einer Recheneinheit simuliert werden.

Vorzugsweise kann die rechnergestützte Simulation und/oder das Trainieren einer maschinellen Lernroutine parallel, wie z.B. auf Grafikprozessoren (englisch: "graphics processing units", kurz GPUs), durchgeführt werden. Damit kann insbesondere eine schnelle und effiziente Berechnung einer Kombination aus günstigen Handlungsschritten erfolgen.

In einer weiteren vorteilhaften Ausführungsform des Verfahrens können die Umgebung und/oder der Ausgangszustand des technischen Systems fortlaufend mittels mindestens eines Sensors erfasst werden und das physikalische Simulationsmodell kann mittels der Sensordaten fortlaufend angepasst werden.

Vorzugsweise werden ein aktueller Ausgangszustand und die Umgebung des technischen Systems kontinuierlich oder zu vorgegebenen Zeitpunkten mittels eines Sensors überwacht, so dass das physikalische Simulationsmodell entsprechend angepasst werden kann.

In einer weiteren vorteilhaften Ausführungsform des Verfahrens können die Regelparameter an das technische System übertragen werden und die optimierte Kombination aus Handlungsschritten kann durch das technische System ausgeführt werden.

Die Regelparameter können zum Steuern des technischen Systems und/oder eines Subsystems des technischen Systems übertragen werden, so dass die Kombination aus Handlungsschritten von diesem ausgeführt werden kann. Vorzugsweise können lediglich Regelparameter zum Steuern für eine Kombination aus Handlungsschritten, der eine günstige Bewertung zugeordnet ist, an das übertragen werden.

In einer vorteilhaften Ausführungsform des Verfahrens kann ein Ergebnis der ausgeführten optimierten Kombination aus Handlungsschritten bewertet werden und diese Bewertung kann zum Trainieren der maschinellen Lernroutine bereitgestellt werden.

Basierend auf dem Ergebnis der Ausführung einer Handlung kann die maschinelle Lernroutine aktualisiert werden, indem das Ergebnis der Handlung bewertet und die Bewertung als gelerntes Wissen abgespeichert wird. Es kann beispielsweise eine Gesamtbewertung der Handlung oder des Zielzustandes oder eine Summe der Bewertung einzelner Handlungsschritte genutzt werden.

Ein weiterer Aspekt der Erfindung betrifft eine Vorrichtung zum rechnergestützten Ermitteln von Regelparametern für eine günstige Handlung eines technischen Systems, umfassend:
- mindestens einen Sensor, der derart eingerichtet ist, einen Ausgangszustand und einer Umgebung des technischen Systems zu erfassen,
- ein Zielmodul, das derart eingerichtet ist, einen Zielzustand für das technische System zu ermitteln,
- eine Modellierungsmodul, das derart eingerichtet ist, ein physikalisches Simulationsmodell des technischen Systems und dessen Umgebung zu selektieren, das zumindest teilweise mit der Umgebung und/oder dem Ausgangszustand übereinstimmt, und Ausgangswerte des physikalischen Simulationsmodells an die Umgebung und/oder den Ausgangszustand des Subsystems anzupassen,
- ein Simulationsmodul, das derart eingerichtet ist, verschiedene Kombinationen aus Handlungsschritten des technischen Systems mittels des physikalischen Simulationsmodells, ausgehend von den Ausgangswerten und in Bezug auf den Zielzustand, zu simulieren, wobei Regelparameter des technischen Systems zum Ausführen der Handlungsschritte variiert werden, und jeweilige resultierende Simulationsdaten auszugeben,
- ein Trainingsmodul, das derart eingerichtet ist, eine maschinelle Lernroutine anhand der jeweiligen resultierenden Simulationsdaten mittels einer Bewertung eines jeweiligen Handlungsschrittes zu trainieren,
- ein Optimierungsmodul, das derart eingerichtet ist, eine optimierte Kombination aus Handlungsschritten anhand der trainierten maschinellen Lernroutine zu ermitteln, wobei der optimierten Kombination aus Handlungsschritten eine günstige Bewertung zugeordnet ist,
   und
- ein Ausgabemodul, das derart eingerichtet ist, die Regelparameter der optimierten Kombination aus Handlungsschritten zum Steuern des technischen Systems auszugeben.

Die Vorrichtung kann insbesondere mit dem technischen System und/oder mit einem technischen Subsystem des technischen Systems gekoppelt oder darin integriert sein.

In einer vorteilhaften Ausführungsform umfasst die Vorrichtung ein Übertragungsmodul zum Übertragen der Regelparameter an das technische System.

In einer weiteren vorteilhaften Ausführungsform umfasst die Vorrichtung mindestens eine Speichereinheit und/oder mindestens eine Recheneinheit.

Eine Speichereinheit kann beispielsweise eine Datenbank sein. Eine Recheneinheit kann insbesondere ein Prozessor oder ein Grafikprozessor sein.

Des Weiteren umfasst die Erfindung ein Computerprogrammprodukt, das direkt in einen programmierbaren Computer ladbar ist, umfassend Programmcodeteile, die dazu geeignet sind, die Schritte des erfindungsgemäßen Verfahrens durchzuführen.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen in schematischer Darstellung:
- Fig. 1: ein Ablaufdiagramm eines erfindungsgemäßen Verfahrens zum rechnergestützten Ermitteln von Regelparametern für eine günstige Handlung eines technischen Systems;
- Fig. 2: eine schematische Darstellung eines erfindungsgemäßen Verfahrens zum rechnergestützten Ermitteln von Regelparametern für eine günstige Handlung eines technischen Systems; und
- Fig. 3: eine schematische Darstellung einer erfindungsgemäßen Vorrichtung zum rechnergestützten Ermitteln von Regelparametern für eine günstige Handlung eines technischen Systems.

Einander entsprechende Gegenstände sind in allen Figuren mit den gleichen Bezugszeichen versehen.

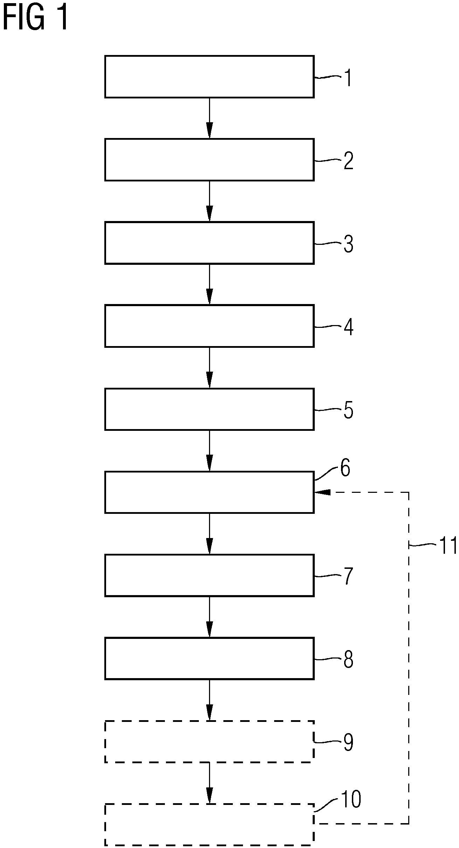

Figur 1 zeigt ein Ablaufdiagramm eines erfindungsgemäßen Verfahrens zum rechnergestützten Ermitteln von Regelparametern für eine günstige Handlung eines technischen Systems, insbesondere eines Subsystems eines technischen Systems, umfassend die folgenden Verfahrensschritte.

Ein technisches System kann im Folgenden insbesondere ein autonomes technisches System, wie z.B. ein autonomer Roboter in einer Industrieumgebung sein. Das technische System kann einzelne Handlungsschritte einer Handlung mittels eines Subsystems, z.B. eines Endeffektors, ausführen, um, ausgehend von einer Ausgangssituation, einen vorgegebenen Zielzustand zu erreichen. Die Handlungsschritte werden mittels Regelparametern vorgegeben, d.h. das technische System wird mittels der Regelparameter gesteuert.

Im Schritt 1 werden mittels mindestens eines Sensors, der dem technischen System zugeordnet oder mit diesem gekoppelt oder in diesem integriert ist, die Umgebung und der Ausgangszustand des technischen Systems erfasst. Beispielsweise kann das technische System ein Roboter mit mindestens einem Endeffektor sein, wobei die aktuelle Position, Ausrichtung und Umgebung des Endeffektors und/oder des technischen System als Ganzes mittels einer Kamera erfasst wird. Die Kamera kann beispielsweise an dem Roboter montiert oder auf diesen gerichtet sein.

Die Umgebung kann beispielsweise die direkte Umgebung in einem vorgegebenen Aktionsradius des technischen Systems sein. Eigenschaften und/oder Zustandsgrößen der Umgebung können insbesondere dort befindliche Objekte oder physikalische Größen wie Raumhöhe oder Temperatur sein.

Im Schritt 2 des Verfahrens wird ein Zielzustand für das technische System, wobei der Zielzustand beispielsweise als ein Parameterdatensatz oder ein Vektor vorliegen und insbesondere den Ergebniszustand einer Handlung beschreiben kann. Der Zielzustand kann vorgegeben sein oder anhand der erfassten Ausgangssituation ermittelt werden. Ein Zielzustand kann beispielsweise angeben, dass ein Objekt vom Endeffektor gegriffen werden soll, wobei ein Ausgangszustand beispielsweise das Objekt in der Umgebung des technischen Systems umfasst.

Im Schritt 3 wird ein physikalisches Simulationsmodell für das technische System und das Subsystem selektiert. Vorzugsweise sind in einer Speichereinheit eine Vielzahl an physikalischen Simulationsmodellen für das technische System in verschiedenen Zuständen und/oder verschiedenen Umgebungen bereitgestellt. Es wird vorzugsweise ein physikalisches Simulationsmodell ausgewählt, das zumindest teilweise mit der Umgebung und/oder dem Ausgangszustand des technischen Systems übereinstimmt. Beispielsweise kann ein Simulationsmodell selektiert werden, welches das technische System in einem ähnlichen Betriebszustand und/oder in einer ähnlichen Betriebsumgebung modelliert, wobei das technische System beispielsweise eine zumindest ähnliche Ausrichtung aufweist wie das modellierte technische System im Simulationsmodell.

Im Schritt 4 werden die Ausgangswerte des physikalischen Simulationsmodells mittels der Sensordaten des Ausgangszustands und/oder der Umgebung des technischen Systems derart angepasst, dass eine Simulation des technischen Systems durchgeführt werden kann. Es kann insbesondere lediglich ein Subsystem des technischen Systems modelliert werden.

Die Komplexität und/oder die Domäne und/oder Dimension des physikalischen Simulationsmodells kann abhängig vom Zielzustand und/oder von der Umgebung und/oder von der Art des technischen Systems gewählt werden. Beispielsweise ist es denkbar, dass eine Simulation der Starrkörpermechanik eingesetzt wird, um das Greifen eines festen Gegenstandes durch einen Roboter zu simulieren. Je nach Einsatzgebiet des technischen Systems kann die Simulation aus anderen physikalischen Domänen aufgesetzt sein. Beispielsweise kann ein autonomes technisches System einen chemischen, hydrodynamischen oder finanzwirtschaftlichen Prozess durchführen, so dass eine entsprechende domänenspezifische Simulation konstruiert werden kann, um die Auswirkungen der Aktionen des technischen Systems zu prognostizieren.

Es können des Weiteren physikalische Eigenschaften von Objekten in der Umgebung, die z.B. als Parameterdaten in einer Datenbank gespeichert sind, eingelesen werden und im Simulationsmodell berücksichtigt werden. Beispielsweise kann mittels eines Sensors die Größe eines durch den Endeffektor zu greifenden Objektes erfasst werden. Dazu kann anhand einer Sammlung von physikalischen Eigenschaften des Objektes beispielsweise die Beschaffenheit der Oberfläche oder das Gewicht des Objektes ermittelt und zusätzlich in die Simulation integriert werden.

Ausgehend von dem selektierten und angepassten physikalischen Simulationsmodell wird in Schritt 5 eine Simulation, z.B. eine dynamische Simulation, des technischen Systems durchgeführt. Das technische System wird insbesondere ausgehend vom erfassten Ausgangszustand und in Bezug auf den vorgegebenen Zielzustand simuliert. Dazu werden die Daten des Ausgangszustands, der Umgebung und des Zielzustands eingelesen. Insbesondere wird mindestens eine Kombination aus Handlungsschritten des technischen Systems simuliert, wobei die Simulation ausgehend vom Ausgangszustand startet und die Handlungsschritte derart gewählt werden, dass der vorgegebene Zielzustand vom technischen System erreicht wird. Um verschiedene Handlungsschritte zu simulieren, werden Regelparameter zum Steuern des technischen Systems variiert. Insbesondere können lediglich Handlungsschritte eines Subsystems des technischen Systems simuliert werden.

Es ist auch möglich, dass verschiedene Kombinationen aus Handlungsschritten, ausgehend von einem Ausgangszustand, den Zielzustand erreichen können. Beispielsweise kann ein autonomer Roboter einen beweglichen Roboterarm um verschiedene Achsen drehen und damit auf verschiedenen Pfaden eine Zielposition erreichen. Vorzugsweise werden die verschiedenen Kombinationen aus Handlungsschritten mittels der physikalischen Simulation simuliert, wobei Regelparameter zum Steuern der verschiedenen Handlungsschritte entsprechend variiert werden. Anschließend werden die Simulationsdaten der jeweiligen Kombination aus Handlungsschritten ausgegeben. Die Simulationsdaten können als Trainingsdaten zum Trainieren eines maschinellen Lernverfahrens genutzt werden.

Die Simulationsdaten können insbesondere auch Informationen über die Wechselwirkung mit der Umgebung beinhalten. Beispielsweise kann es beim Fangen eines Objektes von einem Roboter sinnvoll sein, das Objekt zunächst an einer Wand abprallen zu lassen, bevor es aufgefangen und gegriffen wird. Die Wechselwirkung mit einer Wand, d.h. der Umgebung, und die daraus resultierenden Handlungsschritte können mittels der physikalischen Simulation berechnet werden.

Im Schritt 6 wird eine maschinelle Lernroutine anhand der jeweiligen resultierenden Simulationsdaten trainiert. Eine Lernroutine kann beispielsweise ein Neuronales Netz sein, welches mittels Reinforcement Learning trainiert wird. Das Training kann mittels einer Bewertung eines jeweiligen Handlungsschrittes erfolgen. Beispielsweise kann ein Handlungsschritt abhängig von einem Ergebnis eines Handlungsschrittes und/oder in Bezug auf den Zielzustand bewertet werden. Eine Bewertung kann insbesondere angeben, ob ein Handlungsschritt günstig ist. Beispielsweise kann die Bewertung eine Pfadlänge eines Handlungsschrittes bewerten und entsprechend einen Wert dem Handlungsschritt zuordnen. Anhand der Bewertung jeweiliger Handlungsschritte kann verglichen werden, welcher Handlungsschritt günstiger ist.

Die maschinelle Lernroutine kann insbesondere trainiert werden, sobald Simulationsdaten einer ersten Kombination aus Handlungsschritten berechnet vorliegen. Die Simulation und das Training der maschinellen Lernroutine können vorzugsweise nahezu parallel berechnet werden.

Im Schritt 7 wird eine optimierte Kombination aus günstigen Handlungsschritten, d.h. eine insgesamt günstige Handlung, anhand der trainierten maschinellen Lernroutine ermittelt, wobei unter "optimiert" auch "nahe an einem Optimum" verstanden werden kann. Den günstigen Handlungsschritten ist jeweils eine günstige Bewertung zugeordnet und/oder die Kombination aus günstigen Handlungsschritten weist eine günstige Gesamtbewertung auf. In anderen Worten, es kann anhand der trainierten maschinellen Lernroutine eine Abfolge aus Handlungsschritten ermittelt werden, die beispielsweise besonders effizient oder schnell ist. Die Ermittlung kann beispielsweise anhand eines Vergleichs der Gesamtbewertung einer Kombination aus Handlungsschritten mit den Gesamtbewertungen anderer Kombination aus Handlungsschritten erfolgen.

Im Schritt 8 werden, abhängig von der optimierten Kombination von günstigen Handlungsschritten, die entsprechenden Regelparameter zum Steuern des technischen Systems ausgegeben.

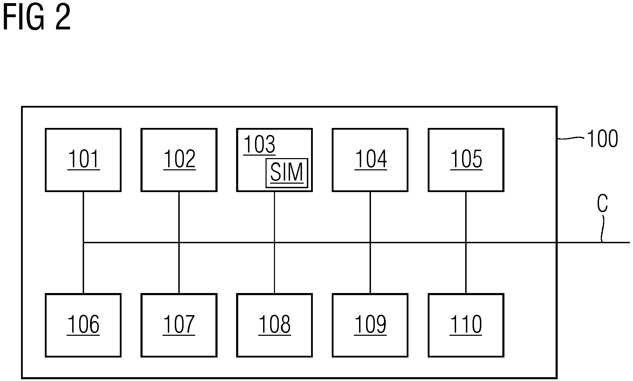

Optional können die Regelparameter im Schritt 9 an das technische System übertragen werden. Beispielsweise kann eine erfindungsgemäße Vorrichtung, wie beispielhaft in Figur 2 gezeigt, nahe am Endeffektor eines Roboters installiert sein und auf einem kurzen Kommunikationsweg die Regelparameter an diesen übertragen. Im Schritt 10 kann das technische System die Kombination aus Handlungsschritten entsprechend durchführen.

Vorzugsweise kann die Berechnung der Simulation und das Training der maschinellen Lernroutine in wenigen Millisekunden oder kürzer durchgeführt werden, so dass eine schnelle Aktion oder Reaktion, ähnlich zu einem Reflex, des Subsystems möglich ist.

Das Ergebnis der ausgeführten Kombination aus Handlungsschritten ist vorzugsweise der vorgegebene Zielzustand. Um die Durchführung der Handlung beispielsweise weiter zu optimieren, kann das Ergebnis der ausgeführten Handlung bewertet werden. Diese Bewertung kann beispielsweise zum Trainieren der maschinellen Lernroutine genutzt werden, siehe Schritt 11. Vorzugsweise kann damit in einer darauffolgenden Iteration die Rechenzeit verkürzt und die Genauigkeit der Pfadplanung erhöht werden.

In Figur 2 ist schematisch eine erfindungsgemäße Vorrichtung 100 in Blockdarstellung gezeigt. Die Vorrichtung 100 kann beispielsweise in einem technischen System und/oder Subsystem des technischen Systems integriert oder mit diesem über eine Kommunikationsverbindung C gekoppelt sein. Vorzugsweise ist die Kommunikationsverbindung möglichst kurz ausgestaltet, um eine schnelle Übertragung der ermittelten Regelparameter für eine günstige Handlung an z.B. ein Subsystem zu ermöglichen. Insbesondere können die einzelnen Einheiten und/oder Module einer erfindungsgemäßen Vorrichtung 100 einzeln in verschiedenen Systemen verbaut und miteinander gekoppelt sein, wie z.B. mehrere Sensoren, die in der Umgebung des technischen Systems TS installiert und mit der den anderen Einheiten kommunizieren.

Die Vorrichtung 100 umfasst mindestens einen Sensor 101 und/oder ist mit mindestens einem Sensor des technischen Systems und/oder Subsystems gekoppelt. Des Weiteren umfasst die Vorrichtung 100 ein Zielmodul 102, ein Modellierungsmodul 103, ein Simulationsmodul 104, ein Trainingsmodul 105, ein Optimierungsmodul 106 zum Ermitteln einer optimierten Kombination aus Handlungsschritten anhand der trainierten maschinellen Lernroutine, ein Ausgabemodul 107, ein Übertragungsmodul 108, mindestens eine Speichereinheit 109 und mindestens Recheneinheit 110. Vorzugsweise sind die Module und Einheiten zumindest teilweise miteinander gekoppelt und können über Kommunikationsverbindungen Daten austauschen.

Mittels des Zielmoduls 102 wird ein Zielzustand für das Subsystem eingelesen. Der Zielzustand soll durch eine Kombination aus Handlungsschritten ausgehend von einem Ausgangszustand und abhängig von der Umgebung des Subsystems erreicht werden. Die Steuerung des Subsystems erfolgt über Regelparameter, wobei mindestens ein Regelparameter einen Handlungsschritt definiert.

Das Modellierungsmodul 103 ist derart ausgestaltet, dass ein physikalisches Simulationsmodell SIM des technischen Systems, das beispielsweise vorab erstellt wurde und auf einer Speichereinheit gespeichert ist, abgefragt und an die Umgebung und/oder den Ausgangszustand des realen technischen Systems angepasst werden kann. Das physikalische Simulationsmodell SIM des technischen Systems, das aus einer Vielzahl an physikalischen Simulationsmodellen selektiert wird, stimmt vorzugsweise zumindest teilweise mit dem Ausgangszustand und/oder der Umgebung des technischen Systems überein. Es kann somit ein Simulationsmodell des gesamten technischen Systems genutzt werden und lediglich Teile bzw. Ausgangswerte an den Zustand und/oder Beschaffenheit eines technischen Subsystems des technischen Systems angepasst werden. Dies ermöglicht insbesondere, dass die Berechnung der Simulation und das darauffolgende Training der maschinellen Lernroutine nahezu in Echtzeit durchgeführt werden kann.

Im Simulationsmodul 104 wird anhand des Simulationsmodells SIM verschiedene Kombinationen aus Handlungsschritten, ausgehend vom Ausgangszustand und in Bezug auf den Zielzustand, simuliert. Es können beispielsweise auch mehrere Simulationen parallel auf mehr als einer Recheneinheit 110 durchgeführt werden. Es ist auch möglich, für verschiedene Ausgangszustände und/oder verschiedene Zielzustände jeweils mindestens eine Simulation durchzuführen und die jeweiligen Simulationsdaten auszugeben und/oder auf einer Speichereinheit 109 zu speichern.

Im Trainingsmodul 105 wird anhand der Simulationsdaten als Trainingsdaten eine maschinelle Lernroutine derart trainiert, günstige Kombinationen von Handlungsschritten für das technische System zu ermitteln. Dazu werden die einzelnen simulierten Handlungsschritte einer Kombination aus Handlungsschritten bewertet, wie z.B. abhängig vom jeweiligen Ergebnis eines Handlungsschrittes. Daraus ergibt sich eine mittels der Simulationsdaten trainierte maschinelle Lernroutine, die eine Kombination aus Handlungsschritten mit einer günstigen Bewertung ausgeben kann. Das Trainingsmodul 105 kann die trainierte maschinelle Lernroutine an das Optimierungsmodul 106 ausgeben. Das Ermitteln einer günstigen oder optimierten Kombination aus Handlungsschritten erfolgt im Optimierungsmodul 106 mittels der trainierten maschinellen Lernroutine. In anderen Worten, im Optimierungsmodul 106 wird die trainierte maschinelle Lernmethode angewandt, um eine optimierte Kombination aus günstigen Handlungsschritten zu ermitteln.

Durch das Ausgabemodul 107 werden die Regelparameter zum Steuern der selektierten optimierten Kombination aus Handlungsschritten an das technische System ausgegeben und durch das Übertragungsmodul 108 an dieses zum Ausführen der Handlungsschritte übertragen.

In der Speichereinheit 109 können Simulationsdaten und/oder Regelparameter gespeichert werden. Beispielsweise können für verschiedene Ausgangszustände und/oder Zielzustände verschiedene Simulationen durchgeführt werden. Ausgehend von diesen verschiedenen Simulationsdaten kann mindestens eine maschinelle Lernroutine gemäß der Erfindung trainiert und anhand der trainierten maschinellen Lernroutine können günstige Kombinationen aus Handlungsschritten ermittelt werden.

Die mindestens eine Recheneinheit 110 kann beispielsweise ein Prozessor oder ein Grafikprozessor sein, auf dem beispielsweise ein erfindungsgemäßes Computerprogrammprodukt Schritte eines erfindungsgemäßen Verfahrens durchführen kann. Insbesondere kann mehr als eine Recheneinheit (nicht dargestellt) für eine parallele Simulation und/oder Training der maschinellen Lernroutine genutzt werden.

Die Vorrichtung 100 kann insbesondere dazu genutzt werden, ein autonomes technisches System auf schnelle, reflexartige Weise zu steuern, wobei günstige Handlungsschritte zum Erreichen eines vorgegebenen Zielzustandes mittels einer maschinellen Lernroutine und einer physikalischen Simulation in kurzer Zeit ermittelt werden können.

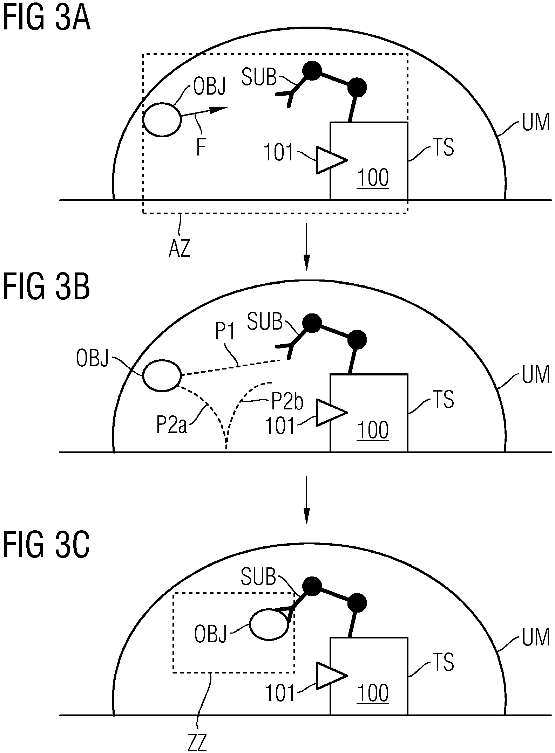

Figur 3 zeigt schematisch ein Ausführungsbeispiel eines erfindungsgemäßen Verfahrens, wobei die Figur 3 in Figur 3A bis 3C unterteilt ist, welche den Ablauf des Verfahrens beschreiben. Als technisches System TS ist ein autonomer Roboter mit einem technischen Subsystem SUB, z.B. einem Endeffektor, dargestellt. Der Endeffektor SUB, z.B. eine Greifvorrichtung, des autonomen Roboters TS kann mittels einer erfindungsgemäßen Vorrichtung 100 derart gesteuert werden, dass er auf schnelle Weise eine Kombination aus günstigen Handlungsschritten durchführen kann. Die Vorrichtung 100 kann beispielsweise dem technischen System TS oder dem Subsystem SUB zugeordnet sein oder im technischen System TS oder im Subsystem SUB integriert sein. Vorzugsweise ist die Vorrichtung 100 nahe am Subsystem SUB oder am technischen System TS installiert, um lediglich einen kurzen Kommunikationsweg zum Übertragen der Regelparameter aufzuweisen.

Dem autonomen Roboter TS ist mindestens einen Sensor 101, wie z.B. eine Kamera, zugeordnet, mit dem die Position und Ausrichtung des Endeffektors und dessen Umgebung UM erfasst werden kann, siehe Figur 3A. Der mindestens eine Sensor 101 ist vorzugsweise mit der Vorrichtung 100 gekoppelt. Beispielsweise erfasst eine Kamera 101 lediglich einen vorgegebenen Bereich der Umgebung des technischen Systems TS, wie z.B. dessen Aktionsbereich. Die erfassten Daten der Umgebung UM und z.B. der Ausrichtung des Endeffektors SUB werden für eine computergestützte Simulation des Roboters als Ausgangswerte bereitgestellt. Des Weiteren kann durch die Kamera in der Umgebung des autonomen Roboters TS ein Objekt OBJ detektiert werden. Die Daten eines Ausgangszustands AZ umfassen beispielsweise das Objekt OBJ, dessen Position und die Position des Endeffektors.

Es wird ein Zielzustand ZZ als Datensatz vorgegeben, wie z.B. das Fangen des Objektes OBJ durch den Endeffektor SUB, wie in Figur 3C dargestellt. Beispielsweise kann der Zielzustand ZZ abhängig vom Ausgangszustand AZ ermittelt werden. Der Ausgangszustand AZ kann beispielsweise den Zustand des Objektes, wie z.B. "auf einer Flugbahn", umfassen. Abhängig von diesem Ausgangszustand AZ kann ein Zielzustand ZZ "Objekt fangen" ermittelt werden.

In der Vorrichtung 100 wird ausgehend vom Ausgangszustand AZ und in Bezug auf den Zielzustand ZZ eine computergestützte physikalische Simulation des Roboters und/oder des Endeffektors und dessen Umgebung durchgeführt. Dazu wird zunächst, beispielsweise von einer Speichereinheit 109, aus einer Vielzahl an physikalischen Simulationsmodellen des Roboters TS eines ausgewählt, das zumindest teilweise mit der erfassten Umgebung UM und/oder dem erfassten Ausgangszustand AZ übereinstimmt. Mittels des selektierten physikalischen Simulationsmodells werden in der Vorrichtung 100 verschiedene Kombinationen von Handlungsschritten ausgehend vom Ausgangszustand AZ und in Bezug auf den Zielzustand ZZ durchgeführt. Insbesondere umfasst das Simulationsmodell physikalische Eigenschaften des technischen Systems TS und dessen Umgebung UM. Zusätzlich können für ein detektiertes Objekt OBJ physikalische Eigenschaften, wie z.B. Gewicht, aus einer Datenbank abgerufen und im Simulationsmodell verwendet werden.

Beispielsweise können verschiedene Pfade des Objektes OBJ bzw. Handlungsschritte des Endeffektors SUB, die zum Zielzustand ZZ führen, simuliert werden, wie in Figur 3B dargestellt. Ausgehend vom Anfangszustand AZ, wobei sich das Objekt OBJ im gezeigten Ausführungsbeispiel auf einer Flugbahn F befindet, und in Bezug auf den Zielzustand ZZ, "Fangen des Objektes" durch den Endeffektor SUB, können verschiedene Handlungsschritte kombiniert und simuliert werden. Beispielsweise kann der Endeffektor das Objekt OBJ im Flug fangen, d.h. der Endeffektor SUB des Roboters TS soll derart mittels Regelparametern gesteuert werden, dass von diesem der Pfad P1 ausgeführt wird. Alternativ kann, unter Berücksichtigung der Gravitation, das Objekt OBJ den Pfad P2a und P2b durchlaufen, d.h. einen Parabelflug mit Aufprall auf dem Boden durchführen. Folglich kann der Endeffektor SUB andere Handlungsschritte durchführen, um das Objekt OBJ nach dem Aufprall im Flug auf dem Pfad P2b zu fangen.

Mittels einer rechnergestützten Simulation und einer maschinellen Lernroutine gemäß der Erfindung kann ermittelt werden, welche der Kombination aus Handlungsschritten günstiger für das technische System TS ist. Dabei kann beispielsweise berücksichtigt werden, dass das Objekt OBJ nach dem Aufprall langsamer fliegt und daher sicherer vom Endeffektor SUB gefangen werden kann.

Die Simulationsdaten der verschiedenen Kombinationen aus Handlungsschritte werden an das Trainingsmodul 105 der Vorrichtung 100 übermittelt, um eine maschinelle Lernroutine derart zu trainieren, eine Kombination aus günstigen Handlungsschritten zu ermitteln. Die maschinelle Lernroutine wird anhand der Simulationsdaten als Trainingsdaten trainiert. Dazu werden die einzelnen simulierten Handlungsschritte jeweils bewertet. Beispielsweise wird ein Handlungsschritt anhand seines Ergebnisses bewertet. Anhand der trainierten maschinellen Lernroutine kann eine günstige Kombination aus Handlungsschritten ermittelt werden. Eine günstige Kombination aus Handlungsschritten kann beispielsweise ein schnelles und energieeffizientes Greifen des Objektes OBJ durch den Endeffektor SUB des Roboters TS als Resultat aufweisen.

Die ermittelte Kombination aus günstigen Handlungsschritten wird an den Roboter oder direkt den Endeffektor übertragen und mittels der entsprechenden Regelparameter ausgeführt. Der Endeffektor kann die einzelnen Handlungsschritte, denen vorzugsweise eine günstige Gesamtbewertung zugeordnet ist, durchführen, so dass der vorgegebene Zielzustand ZZ erreicht wird, siehe Figur 3C.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum rechnergestützten Ermitteln von Regelparametern für eine günstige Handlung eines technischen Systems, umfassend die Verfahrensschritte:
- Erfassen (1) eines Ausgangszustands (AZ) und einer Umgebung (UM) des technischen Systems (TS) mittels mindestens eines Sensors (101),
- Ermitteln (2) eines Zielzustandes (ZZ) für das technische System (TS),
- Selektieren (3) eines physikalischen Simulationsmodells (SIM) des technischen Systems (TS) und dessen Umgebung, das zumindest teilweise mit der Umgebung (UM) und/oder dem Ausgangszustand (AZ) übereinstimmt,
- Anpassen (4) von Ausgangswerten des physikalischen Simulationsmodells (SIM) an die Umgebung (UM) und/oder den Ausgangszustand (AZ),
- Simulieren (5) verschiedener Kombinationen aus Handlungsschritten des technische Systems (TS) mittels des physikalischen Simulationsmodells (SIM), ausgehend von den Ausgangswerten und in Bezug auf den Zielzustand (ZZ), wobei Regelparameter des technische Systems (TS) zum Ausführen der Handlungsschritte variiert werden, und Ausgeben von jeweiligen resultierenden Simulationsdaten,
- Trainieren (6) einer maschinellen Lernroutine anhand der jeweiligen resultierenden Simulationsdaten mittels einer Bewertung eines jeweiligen Handlungsschrittes,
- Ermitteln (7) einer optimierten Kombination aus Handlungsschritten anhand der trainierten maschinellen Lernroutine, wobei der optimierten Kombination aus Handlungsschritten eine günstige Bewertung zugeordnet ist,
und
- Ausgeben (8) der Regelparameter der optimierten Kombination aus Handlungsschritten zum Steuern des technischen System (TS) .

2. Verfahren nach Anspruch 1, wobei mindestens ein physikalisches Simulationsmodell (SIM) des technischen Systems und dessen Umgebung generiert und gespeichert und anschließend zur Selektion bereitgestellt wird.

3. Verfahren nach einem der vorhergehenden Ansprüche, wobei die maschinelle Lernroutine trainiert wird, sobald Simulationsdaten von mindestens einer Kombination aus Handlungsschritten verfügbar sind.

4. Verfahren nach einem der vorhergehenden Ansprüche, wobei die Bewertung eines Handlungsschrittes abhängig von einem Ergebnis eines Handlungsschritts in Bezug auf den Zielzustand (ZZ) ausgeführt wird.

5. Verfahren nach einem der vorhergehenden Ansprüche, wobei der Zielzustand (ZZ) abhängig vom erfassten Anfangszustand (AZ) und/oder von der erfassten Umgebung des technischen Systems ermittelt wird.

6. Verfahren nach einem der vorhergehenden Ansprüche, wobei das physikalische Simulationsmodell (SIM) abhängig vom Ausgangszustand (AZ) und/oder vom Zielzustand (ZZ) und/oder von der Umgebung (UM) und/oder von einer Art des technischen Systems (TS) konstruiert wird.

7. Verfahren nach einem der vorhergehenden Ansprüche, wobei physikalische Eigenschaften eines Objektes (OBJ) in der Umgebung (UM) des technischen Systems (TS) als Parameterdaten erfasst, in einer Speichereinheit gespeichert und im physikalischen Simulationsmodell (SIM) integriert werden.

8. Verfahren nach einem der vorhergehenden Ansprüche, wobei die Simulation des technischen Systems (TS) und das Training der maschinellen Lernroutine für mehr als einen Zielzustand (ZZ) und/oder für mehr als einen Ausgangszustand (AZ) des technischen Systems (TS) durchgeführt werden und jeweils eine optimierte Kombination aus Handlungsschritten für das technische System (TS) mit einer günstigen Bewertung ermittelt und in einer Speichereinheit gespeichert wird.

9. Verfahren nach einem der vorhergehenden Ansprüche, wobei Regelparameter für eine optimierte Kombination aus Handlungsschritten mit einer günstigen Bewertung in Abhängigkeit eines Zielzustandes (ZZ) in einer Speichereinheit gespeichert werden.

10. Verfahren nach einem der vorhergehenden Ansprüche, wobei verschiedene Kombinationen aus Handlungsschritten des technischen Systems (TS) zeitlich parallel auf mehr als einer Recheneinheit simuliert werden.

11. Verfahren nach einem der vorhergehenden Ansprüche, wobei die Umgebung (UM) und/oder der Ausgangszustand (AZ) des technischen Systems (TS) fortlaufend mittels mindestens eines Sensors (101) erfasst werden und das physikalische Simulationsmodell (SIM) mittels der Sensordaten fortlaufend angepasst wird.

12. Verfahren nach einem der vorhergehenden Ansprüche, wobei die Regelparameter an das technische System (TS) übertragen (9) werden und die optimierte Kombination aus Handlungsschritten durch das technische System (TS) ausgeführt wird (10) .

13. Verfahren nach Anspruch 12, wobei ein Ergebnis der ausgeführten optimierten Kombination aus Handlungsschritten bewertet wird und diese Bewertung zum Trainieren der maschinellen Lernroutine bereitgestellt wird (11).

14. Vorrichtung (100) zum rechnergestützten Ermitteln von Regelparametern für eine günstige Handlung eines technischen Systems, umfassend:
- mindestens einen Sensor (101), der derart eingerichtet ist, einen Ausgangszustand (AZ) und einer Umgebung (UM) des technischen Systems (TS) zu erfassen,
- ein Zielmodul (102), das derart eingerichtet ist, einen Zielzustand (ZZ) für das technische System (SUB) zu ermitteln,
- ein Modellierungsmodul (103), das derart eingerichtet ist, ein physikalisches Simulationsmodell (SIM) des technischen Systems (TS) und dessen Umgebung zu selektieren, das zumindest teilweise mit der Umgebung (UM) und/oder dem Ausgangszustand (AZ) übereinstimmt, und Ausgangswerte des physikalischen Simulationsmodells (SIM) an die Umgebung (UM) und/oder den Ausgangszustand (AZ) anzupassen,
- ein Simulationsmodul (104), das derart eingerichtet ist, verschiedene Kombinationen aus Handlungsschritten des technischen Systems (TS) mittels des physikalischen Simulationsmodells (SIM), ausgehend von den Ausgangswerten und in Bezug auf den Zielzustand (ZZ), zu simulieren, wobei Regelparameter des technischen Systems (TS) zum Ausführen der Handlungsschritte variiert werden, und jeweilige resultierende Simulationsdaten auszugeben,
- ein Trainingsmodul (105), das derart eingerichtet ist, eine maschinelle Lernroutine anhand der jeweiligen resultierenden Simulationsdaten mittels einer Bewertung eines jeweiligen Handlungsschrittes zu trainieren,
- ein Optimierungsmodul (106), das derart eingerichtet ist, eine optimierte Kombination aus Handlungsschritten anhand der trainierten maschinellen Lernroutine zu ermitteln, wobei der optimierten Kombination aus Handlungsschritten eine günstige Bewertung zugeordnet ist,
und
- ein Ausgabemodul (107), das derart eingerichtet ist, die Regelparameter der optimierten Kombination aus Handlungsschritten zum Steuern des technischen Systems (TS) auszugeben.

15. Vorrichtung nach Anspruch 14, umfassend ein Übertragungsmodul (108) zum Übertragen der Regelparameter an das technische System (TS).

16. Vorrichtung nach Anspruch 14 oder 15 umfassend mindestens eine Speichereinheit (109) und/oder mindestens eine Recheneinheit (110).

17. Computerprogrammprodukt, das direkt in einen programmierbaren Computer ladbar ist, umfassend Programmcodeteile, die dazu geeignet sind, die Schritte des Verfahrens nach einem der Ansprüche 1 bis 13 durchzuführen.
